# EUROPÄISCHE PATENTSCHRIFT

(11) **EP 2 812 485 B1**
(45) Veröffentlichungstag und Bekanntmachung des Hinweises auf die Patenterteilung: **27.12.2017**
(21) Anmeldenummer: 13704021.8
(22) Anmeldetag: 30.01.2013
(51) Int. Cl.: D21F 3/08

(54) **WALZENBEZUG, VERFAHREN ZU DESSEN HERSTELLUNG UND VERWENDUNG DES WALZENBEZUGES**
ROLL COVER, METHOD FOR THE PRODUCTION THEREOF AND USE OF THE ROLL COVER
REVÊTEMENT DE ROULEAU, SON PROCÉDÉ DE FABRICATION ET UTILISATION DU REVÊTEMENT

(30) Priorität: 07.02.2012 DE 102012201782
(43) Veröffentlichungstag der Anmeldung: 17.12.2014
(73) Patentinhaber: Voith Patent GmbH, 89522 Heidenheim (DE)
(72) Erfinder: WOKUREK, Michael, A-1100 Wien (AT)
(86) Internationale Anmeldenummer: PCT/EP2013/051748
(87) Internationale Veröffentlichungsnummer: WO 2013/117469

(56) Entgegenhaltungen:
- EP-A1- 1 712 676
- WO-A1-98/56984
- WO-A2-2009/103301
- DE-A1-102007 042 781
- DE-B3-102009 028 215

## Beschreibung

Die Erfindung betrifft eine Walze und einen Walzenbezug insbesondere zur Verwendung in einer Pressenpartie in einer Maschine zur Herstellung einer Faserstoffbahn wie einer Papier-, Karton- oder Tissuemaschine nach dem Oberbegriff der Ansprüche 1 und 5 sowie ein Verfahren zur Herstellung eines derartigen Walzenbezuges nach dem Oberbegriff von Anspruch 9. Ferner betrifft die Erfindung eine Verwendung des erfindungsgemäßen Walzenbezugs sowie der erfindungsgemäßen Walze.

Presswalzenbezüge mit einem Elastizitätsmodul im Bereich von 50 bis 500 N/mm² aus Polyurethan-Elastomeren sind Stand der Technik.

Beispielsweise ist aus der EP 2 118 164 bzw. WO 2009/103301 ein Verfahren zur Herstellung eines Walzenmantels oder Walzenbezugs einer Walze aus einem NDI basierten Polyurethan-Kunststoff bekannt. Dabei soll eine möglichst rasche Überwindung der Grünfestigkeitsschwäche zur Vermeidung von Spannungsrissen dadurch erreicht werden, dass der dem Polyurethan zugesetzte Härter die Topfzeit auf 5 bis 60 s verkürzt. Weiterhin wird auch ein NDI-Polyurethan zur Herstellung eines Walzenmantels oder Walzenbezugs einer Walze beschrieben.

Weitere Walzenbezüge sind unter anderem aus den folgenden Dokumenten bekannt geworden:
DE 10 2007 042781 A1
EP 1 712 676 A1
DE 10 2009 028215 B3
WO 98/56984 A1.

In einigen Anwendungsfällen, insbesondere in Positionen mit hohen Pressenbelastungen von mehr als 100 kN/m, bei hohen Maschinengeschwindigkeiten oder hoher Chemikalienbelastung im Stoff kommt es bei den bekannten Bezügen zu sehr hohen Verschleißraten und daraus resultierend zu unbefriedigend kurzen Schleifintervallen .

Es ist demnach Aufgabe der Erfindung, eine Walze und einen Walzenbezug anzugeben, bei welchem die Verschleißfestigkeit für höchstbelastete Anwendungen verbessert ist. Weiterhin werden ein Verfahren zur Herstellung eines derartigen Bezuges sowie eine Verwendung eines Walzenbezuges und einer Walze angegeben.

Die Aufgabe wird durch die Merkmale der unabhängigen Ansprüche gelöst.

Hierbei ist erfindungsgemäß vorgesehen, dass der Walzenbezug ein Elastizitätsmodul von 500 bis 1500 N/mm² aufweist. Dies kann durch ein entsprechendes zweistufiges Härtungsverfahren erzielt werden. Der resultierende Walzenbezug ist stark vernetzt und weist somit einen hohen Elastizitätsmodul und eine hohe Härte auf. Die Standzeit des Walzenbezuges kann somit signifikant verbessert werden.

Weitere vorteilhafte Aspekte und Weiterbildungen der Erfindung sind in den Unteransprüchen angegeben.

Erfindungsgemäß weist der Walzenbezug zumindest eine Polymerschicht auf, die aus einem Harz-Härter-Gemisch besteht.

Erfindungsgemäß ist das Harz ein Reaktionsprodukt aus einem ersten reaktiveren Diisocyanat und einem Diol in einem molaren Verhältnis von mindestens 2:1, gemischt mit einem zweiten weniger reaktiven Diisocyanat. Die genannten Komponenten ermöglichen eine stärkere Vernetzung und einen zweistufigen Härtungsprozess.

Dabei ist erfindungsgemäß das erste Diisocyanat ein reaktives Diisocyanat und das zweite Diisocyanat ein weniger reaktives Diisocyanat. Diese Kombination führt überraschenderweise dazu, dass die daraus hergestellten Walzenbezüge hervorragende Eigenschaften für die Anwendung in hochbelasteten Positionen in schnell laufenden Faserbahnmaschinen aufweisen.

Das reaktive Diisocyanat ist vorteilhafterweise ausgewählt aus: MDI (Methylendiphenyldiisocyanat), PPDI (P-Phenylendiisocyanat), TDI (Toluol-2,4-Diisocyanat), NDI (Naphthylen-Diisocyanat) oder anderen aromatischen Verbindungen.

Das weniger reaktive Diisocyanat ist vorteilhafterweise ausgewählt aus: HMDI (Methylen-bis-(4-lsocyanatocyclohexan)), CHDI (1,4-Cyclohexyldiisocyanat), HDI (Hexamethylen-1,6-Diisocyanat), IPDI (Isophorondiisocyanat) oder anderen aliphatischen Verbindungen.

Der Härter kann vorteilhafterweise eine Zubereitung aus unterschiedlich reaktiven Diaminen und Diolen umfassen.

Gemäß einem vorteilhaften Aspekt des erfindungsgemäßen Verfahrens wird der Walzenbezug einem zweistufigen Härtungsverfahren unterzogen. Es ist nicht notwendig, mehrere Schichten aufzubringen oder verschiedene Materialien in verschiedenen Bearbeitungsschritten anzuwenden.

Vorteilhaft ist insbesondere, dass in einem ersten Verfahrensschritt durch eine erste Aushärtungsreaktion ein Elastizitätsmodul von 50 bis 500 N/mm² erzielt wird. Da diese Werte mittels der derzeit gängigen Verfahren zur Herstellung polymerer Walzenbezüge erzielbar sind, können die bekannten Verfahren eingesetzt werden, um die Vorstufe des fertigen Produktes herzustellen. Die kostenintensive Anschaffung anderer Maschinen kann vorteilhafterweise entfallen.

Vorteilhaft ist weiterhin, dass in einem zweiten Verfahrensschritt durch eine zweite Aushärtungsreaktion ein Elastizitätsmodul von 500 bis 1500 N/mm² erzielt wird, wobei der zweite Verfahrensschritt mittels einer thermischen Nachbehandlung für mindestens 48 Stunden bei 120° erfolgt. Auch hier ist kein teures Spezialequipment notwendig, da die gewünschten Materialeigenschaften durch die Reaktivität der Komponenten der Mischung einstellbar sind.

Bevorzugt kann der Walzenbezug durch ein Gießauftragsverfahren, insbesondere durch ein Ribbon-Flow-Verfahren, hergestellt werden.

Gemäß einem vorteilhaften Aspekt der Erfindung ist es möglich, die den Walzenbezug bildende Gießmasse durch Herstellen eines Gemisches aus einem ersten Diisocyanat mit einem zweiten Diisocyanat und einem Diol herzustellen, wobei die Reihenfolge der Vermischung der Komponenten beliebig ist.

Die Erfindung wird nachfolgend unter Bezugnahme auf ein bevorzugtes Ausführungsbeispiel näher erläutert.

Die oben angeschnittene Problemstellung kann durch einen besonders harten Walzenbezug aus Polyurethan gelöst werden, welcher einen Elastizitätsmodul im Bereich von 500 bis 1500 N/mm² aufweist. Derartige Walzenbezüge zeigen auch unter Höchstbelastung eine ausreichend geringe Verformung der Oberflächenstruktur und damit auch eine ausreichend gute Verschleißfestigkeit mit zufriedenstellenden Schleif- und Neubezugsintervallen.

Bei der Herstellung eines derartigen Bezuges sieht sich der Fachmann mit besonderen technischen Hindernissen konfrontiert. Besonders schwierig bei der Fertigung von sehr harten auf einem Metallkörper wie einem Walzenkern angeordneten Kunststoffwalzenbezügen ist es, die Eigenspannungen zu kontrollieren, die sich aufgrund der unterschiedlichen thermischen Ausdehnungskoeffizienten der verbundenen Materialien und des Volumenschrumpfes während der Aushärtungsreaktion aufbauen.

Das Problem kann erfindungsgemäß durch die Anwendung in einer zweistufigen Aushärtungsreaktion gelöst werden. Dadurch können die Spannungen, die aus dem Volumenschwund resultieren, und die Spannungen aufgrund der unterschiedlichen thermischen Ausdehnungskoeffizienten im zeitlichen Auftreten voneinander getrennt werden und so das effektiv auftretende Eigenspannungsniveau so weit gesenkt werden, dass es nicht zu Rissbildung im Walzenbezug während und nach dem Fertigungsprozess kommt.

Die erste Stufe der Aushärtungsreaktion führt zu einem Material mit einem Elastizitätsmodul im Bereich von 50 bis 500 N/mm². Die Aufbringung des Materials auf dem Walzenkern erfolgt dabei durch einen sog. Ribbon-Flow-Prozess, bei welchem das flüssige Polyurethan mittels eines verfahrbaren Gießkopfes auf den Walzenkern aufgetragen wird, welcher sich unter dem Gießkopf kontinuierlich dreht. Das Verfahren ist an sich bekannt, so dass es an dieser Stelle nicht im Detail beschreiben werden muss.

Die Gießmasse wird im Gießkopf abgemischt und besteht typischerweise aus zwei Komponenten. Eine erste Komponente (ein Isocyanat bzw. Harz) stellt eine Zubereitung aus einem PU Präpolymer dar. Das PU Präpolymer ist ein Reaktionsprodukt aus einem Diisocyanat und einem makromolekularen Diol in einem molaren Verhältnis von 2:1 oder größer und einem Diisocyanat.

Der stark ausgeprägte zweistufige Reaktionsverlauf wird hier erfindungsgemäß durch Verwendung von zwei verschiedenen Diisocyanaten erzwungen, die einen sehr großen Reaktivitätsunterschied haben. Als reaktive Diisocyanate finden aromatische Verbindungen wie z.B. MDI (Methylendiphenyldiisocyanat), PPDI (P-Phenylendiisocyanat), TDI (Toluol-2,4-Diisocyanat) oder NDI (Naphthylen-Diisocyanat) Verwendung. Als weniger reaktive Diisocyanate kommen dagegen aliphatische Verbindungen wie z.B. HMDI (Methylen-bis-(4-lsocyanatocyclohexan)), CHDI (1,4-Cyclohexyldiisocyanat), HDI (Hexamethylen-1,6-Diisocyanat) oder IPDI (Isophorondiisocyanat) zum Einsatz. Besonders vorteilhaft ist es, das PU Präpolymer aus einem makromolekularen Diol und einem reaktiven Diisocyanat aufzubauen und dieses dann mit einem weniger reaktiven Diisocyanat abzumischen.

Eine zweite Komponente (ein Härter bzw. Vernetzer oder Kettenverlängerer) besteht aus einer Zubereitung von unterschiedlich reaktiven Diaminen und Diolen. Über die Massenanteile und die Reaktivitäten der Bestandteile dieser Komponente wird die unmittelbare Topfzeit der Gießmasse eingestellt. Die Topfzeit ist dabei so gewählt, dass die Gießmasse einerseits entsprechend schnell aushärtet und nicht während des Auftragungsprozesses abtropft und andererseits noch so reaktiv und viskos ist, dass sie mit der jeweils nächsten Polymerwindung, die auf Stoß an die vorhergehende Windung angelegt wird, benetzt, verfließt und reagiert. Bei diesem Schritt kommen vornehmlich die reaktiven Diisocyanate und die reaktiven Härterkomponenten zur Reaktion.

Die Messung der Topfzeit erfolgt dabei nach folgendem Verfahren: aus der betriebsbereiten und kalibrierten Zweikomponenten-Gießmaschine wird 3 Sekunden lang frisch gemischtes Zweikomponenten-Gießelastomer in einen Kunststoffbecher gegossen und mittels Holzspatel ständig unter wiederholtem Herausziehen in 5-sekündigen Abständen derselben und Beobachten des Fließverhalten der dabei abfließenden stetig aushärtenden Gießmasse gerührt. Die Zeitspanne vom Rührbeginn bis zu dem Zeitpunkt, an dem die Masse von einer zähfließenden Flüssigkeit zu einer standfesten Paste erstarrt, wird als Topfzeit bezeichnet. Das beschriebene Verfahren ist dem auf dem Gebiet der Polymerchemie einschlägig gebildeten Fachmann bekannt. Es handelt sich um ein branchenübliches Verfahren bei der Herstellung von Walzenbezügen aus Polymer.

Die zweite Stufe der Härtungsreaktion erfolgt während einer thermischen Nachbehandlung des so aufgebrachten Kunststoffbezuges. Bei diesem Schritt kommen die wenig reaktiven Komponenten der Materialmischung zur Reaktion. Dabei steigt der Elastizitätsmodul um mindestens eine Größenordnung in den erfindungsgemäßen Bereich von 500 bis 1500 N/mm² an.

Erfindungsgemäß hat die Gießmasse zu diesem Zeitpunkt schon eine so hohe Eigenfestigkeit und Reißdehnung entwickelt, dass die während der thermischen Nachbehandlung und vor allem beim Abkühlen auftretenden thermischen Eigenspannungen nicht mehr zu einer Zerstörung des Bezugsgefüges führen.

Nachfolgend ist eine Mischung für ein bevorzugtes Ausführungsbeispiel der Erfindung angegeben:
Als Isocyanat Komponente wird folgende Mischung verwendet:
   90 Teile Adiprene RFA 1201
   10 Teile Desmodur W

Adiprene RFA1201 ist hierbei ein aus PTMEG 1000 und MDI mit einem NCO-Gehalt von 11,5 % gebildetes Präpolymer. Desmodur W ist technisches HMDI und ist in diesem System die wenig reaktive Komponente.

Als Härterkomponente wird folgende Mischung verwendet:
84 Teile Lonzacure MCDEA
10 Teile Lonzacure MDIPA
6 Teile Amicure PACM

Die beiden Komponenten werden über eine Zweikomponenten-Gießmaschine im Verhältnis von ca. 100 Teilen Präpolymer zu 55 Teilen Härtermischung gemischt und unter Verwendung einer Breitschlitzdüse spiralig auf den rotierenden Walzenkörper aufgegossen, der vorher üblicherweise mit einer speziellen Haftschicht versehen wird. Das exakte Mischungsverhältnis der Komponenten wird nach Messung des NCO-Gehaltes so berechnet, dass das molare Verhältnis von reaktiven H-Atomen im Härter zu NCO-Gruppen im Isocyanat-Harz ca. 0,93 bis 0,97, bevorzugt 0,95, beträgt, also ein leichter Überschuss der NCO-Gruppen vorliegt.

Der erste Reaktionsschritt ist hier wenige Minuten nach dem Aufbringen bereits abgeschlossen. Die Nachhärtung der noch vorhandenen weniger reaktiven Bestandteile erfolgt durch eine thermische Nachbehandlung des Werkstückes im Heißluftofen bei 120°C für einen Zeitraum von mindestens 48 Stunden.

## Patentansprüche

1. Walzenbezug insbesondere zur Verwendung in einer Pressenpartie einer Maschine zur Herstellung einer Faserstoffbahn wie einer Papier-, Karton- oder Tissuemaschine, wobei der Walzenbezug auf einem Walzenkern anordenbar ist, der insbesondere aus Metall oder einem Faserverbundwerkstoff besteht, wobei der Walzenbezug ein Elastizitätsmodul von 500 bis 1500 N/mm² aufweist, wobei der Walzenbezug zumindest eine Polymerschicht umfasst und die zumindest eine Polymerschicht aus einem Harz-Härter-Gemisch besteht, **dadurch gekennzeichnet, dass** das Harz ein Reaktionsprodukt aus einem ersten Diisocyanat und einem Diol in einem molaren Verhältnis von mindestens 2:1, gemischt mit einem zweiten Diisocyanat ist; und das erste Diisocyanat ein reaktives Diisocyanat und das zweite Diisocyanat ein weniger reaktives Diisocyanat ist.

2. Walzenbezug nach Anspruch 1, **dadurch gekennzeichnet, dass** das reaktive Diisocyanat ausgewählt ist aus: MDI (Methylendiphenyldiisocyanat), PPDI (P-Phenylendiisocyanat), TDI (Toluol-2,4-Diisocyanat), NDI (Naphthylen-Diisocyanat) oder anderen aromatischen Verbindungen.

3. Walzenbezug nach Anspruch 1 oder 2, **dadurch gekennzeichnet, dass** das weniger reaktive Diisocyanat ausgewählt ist aus: HMDI (Methylen-bis-(4-Isocyanatocyclohexan)), CHDI (1,4-Cyclohexyldiisocyanat), HDI (Hexamethylen-1,6-Diisocyanat), IPDI (Isophorondiisocyanat) oder anderen aliphatischen Verbindungen.

4. Walzenbezug nach einem der Ansprüche 1 bis 3, **dadurch gekennzeichnet, dass** der Härter eine Zubereitung aus unterschiedlich reaktiven Diaminen und Diolen umfasst.

5. Walze zur Verwendung in einer Pressenpartie einer Maschine zur Herstellung einer Faserstoffbahn wie einer Papier-, Karton- oder Tissuemaschine, wobei der Walzenbezug auf einem Walzenkern angeordnet ist, **dadurch gekennzeichnet, dass** der Walzenbezug nach einem der vorhergehenden Ansprüche ausgeführt ist.

6. Verfahren zur Herstellung eines Walzenbezuges gemäß einem der Ansprüche 1 bis 4, **dadurch gekennzeichnet, dass** der Walzenbezug einem zweistufigen Härtungsverfahren unterzogen wird.

7. Verfahren nach Anspruch 6, **dadurch gekennzeichnet, dass** in einem ersten Verfahrensschritt durch eine erste Aushärtungsreaktion ein Elastizitätsmodul von 50 bis 500 N/mm² erzielt wird.

8. Verfahren nach Anspruch 7, **dadurch gekennzeichnet, dass** in einem zweiten Verfahrensschritt durch eine zweite Aushärtungsreaktion ein Elastizitätsmodul von 500 bis 1500 N/mm² erzielt wird.

9. Verfahren nach einem der Ansprüche 7 oder 8, **dadurch gekennzeichnet, dass** der zweite Verfahrensschritt mittels einer thermischen Nachbehandlung für mindestens 48 Stunden bei 120° erfolgt.

10. Verfahren nach einem der Ansprüche 7 bis 9, **dadurch gekennzeichnet, dass** der Walzenbezug durch ein Gießauftragsverfahren, insbesondere durch ein Ribbon-Flow-Verfahren, hergestellt wird.

11. Verfahren nach einem der Ansprüche 7 bis 10, **gekennzeichnet durch** Herstellen eines Gemisches aus einer ersten Komponente, umfassend das erste reaktive Diisocyanat und das Diol und einer zweiten Komponente, umfassend das zweite weniger reaktive Diisocyanat, wobei die Reihenfolge der Vermischung der beiden Komponenten beliebig ist.

12. Verwendung eine Walzenbezugs in einer Pressenpartie einer Maschine zur Herstellung einer Faserstoffbahn wie einer Papier-, Karton- oder Tissuemaschine, **dadurch gekennzeichnet, dass** der Walzenbezug nach einem der Ansprüche 1 bis 4 ausgeführt ist.

13. Verwendung einer Walze nach Anspruch 5 in einer Pressenpartie einer Maschine zur Herstellung einer Faserstoffbahn wie einer Papier-, Karton- oder Tissuemaschine.

## Claims

1. Roll covering in particular for use in a press section of a machine for the production of a web of fiber-based material, for example a papermaking machine, paperboard machine, or tissue machine, where the roll covering can be arranged on a roll core which in particular is composed of metal or of a fiber-composite material, **where** the modulus of elasticity of the roll covering is from 500 to 1500 N/mm², where the roll covering comprises at least one polymer layer and the at least one polymer layer is composed of a resin-hardener mixture, **characterized in that** the resin is a reaction product of a first diisocyanate and of a diol in a molar ratio of at least 2:1, mixed with a second diisocyanate; and the first diisocyanate is a reactive diisocyanate and the second diisocyanate is a less reactive diisocyanate.

2. Roll covering according to Claim 1, **characterized in that** the reactive diisocyanate is selected from: MDI (methylenediphenyl diisocyanate), PPDI (p-phenylene diisocyanate), TDI (toluene 2,4-diisocyanate), NDI (naphthylene diisocyanate), and other aromatic compounds.

3. Roll covering according to Claim 1 or 2, **characterized in that** the less reactive diisocyanate is selected from: HMDI (methylenebis(4-isocyanatocyclohexane)), CHDI (cyclohexyl 1,4-diisocyanate), HDI (hexamethylene 1,6-diisocyanate), IPDI (isophorone diisocyanate), and other aliphatic compounds.

4. Roll covering according to any of Claims 1 to 3, **characterized in that** the hardener comprises a preparation made of differently reactive diamines and diols.

5. Roll for use in a press section of a machine for the production of a web of fiber-based material, such as a papermaking machine, paperboard machine, or tissue machine, where the roll covering is arranged on a roll core, **characterized in that** the roll covering is designed according to one of the preceding claims.

6. Process for the production of a roll covering according to any of Claims 1 to 4, **characterized in that** the roll covering is subjected to a two-stage curing process.

7. Process according to Claim 6, **characterized in that** in a first step a modulus of elasticity of from 50 to 500 N/mm² is achieved via a first hardening reaction.

8. Process according to Claim 7, **characterized in that** in a second step a modulus of elasticity of from 500 to 1500 N/mm² is achieved via a second hardening reaction.

9. Process according to Claim 7 or 8, **characterized in that** the second step uses thermal posttreatment at 120° for at least 48 hours.

10. Process according to any of Claims 7 to 9, **characterized in that** the roll covering is produced via a cast-application process, in particular via a ribbon-flow process.

11. Process according to any of Claims 7 to 10, **characterized by** production of a mixture of a first component, comprising the first reactive diisocyanate and comprising the diol and of a second component, comprising the second less reactive diisocyanate, where the sequence of mixing of the two components is as desired.

12. Use of a roll covering in a press section of a machine for the production of a web of fiber-based material, for example a papermaking machine, paperboard machine, or tissue machine, **characterized in that** the roll covering is designed according to any of Claims 1 to 4.

13. Use of a roll according to Claim 5 in a press section of a machine for the production of a web of fiber-based material, for example a papermaking machine, paperboard machine, or tissue machine.

## Revendications

1. Revêtement de rouleau à utiliser en particulier dans une section de presse d'une machine pour fabriquer une bande en matière fibreuse telle qu'une machine à papier, à carton ou à papier mousseline, le revêtement de rouleau étant disposé sur une âme de rouleau qui est constituée en particulier de métal ou d'un matériau composite fibreux, le revêtement de rouleau présentant un module d'élasticité de 500 à 1 500 N/mm², le revêtement de rouleau comprenant au moins une couche polymère et ladite au moins une couche polymère étant constituée d'un mélange résine-durcisseur, **caractérisé en ce que** la résine est un produit de réaction d'un premier diisocyanate et d'un diol en un rapport molaire d'au moins 2:1 mélangé avec un deuxième diisocyanate ; et le premier diisocyanate est un diisocyanate réactif et le deuxième diisocyanate est un diisocyanate moins réactif.

2. Revêtement de rouleau selon la revendication 1, **caractérisé en ce que** le diisocyanate réactif est choisi parmi : le MDI (diphényldiisocyanate de méthylène), le PPDI (diisocyanate de P-phénylène), le TDI (2,4-diisocyanate de toluène), le NDI (diisocyanate de naphtylène) ou d'autres composés aromatiques.

3. Revêtement de rouleau selon la revendication 1 ou 2, **caractérisé en ce que** le diisocyanate moins réactif est choisi parmi : l'HMDI (méthylène-bis-(4-isocyanatocyclohexane)), le CHDI (diisocyanate de 1,4-cyclohexyle), l'HDI (1,6-diisocyanate d'hexaméthylène), l'IPDI (diisocyanate d'isophorone) ou d'autres composés aliphatiques.

4. Revêtement de rouleau selon l'une quelconque des revendications 1 à 3, **caractérisé en ce que** le durcisseur comprend une préparation de diamines et de diols différemment réactifs.

5. Rouleau à utiliser dans une section de presse d'une machine pour fabriquer une bande en matière fibreuse telle qu'une machine à papier, à carton ou à papier mousseline, le revêtement de rouleau étant disposé sur une âme de rouleau, **caractérisé en ce que** le revêtement de rouleau est réalisé selon l'une quelconque des revendications précédentes.

6. Procédé de fabrication d'un revêtement de rouleau selon l'une quelconque des revendications 1 à 4, **caractérisé en ce que** le revêtement de rouleau est soumis à un procédé de durcissement à deux étapes.

7. Procédé selon la revendication 6, **caractérisé en ce qu'**un module d'élasticité de 50 à 500 N/mm² est obtenu lors d'une première étape de procédé par une première réaction de durcissement.

8. Procédé selon la revendication 7, **caractérisé en ce qu'**un module d'élasticité de 500 à 1 500 N/mm² est obtenu lors d'une deuxième étape de procédé par une deuxième réaction de durcissement.

9. Procédé selon l'une quelconque des revendications 7 ou 8, **caractérisé en ce que** la deuxième étape de procédé a lieu au moyen d'un post-traitement thermique pendant au moins 48 heures à 120 °C.

10. Procédé selon l'une quelconque des revendications 7 à 9, **caractérisé en ce que** le revêtement de rouleau est fabriqué par un procédé d'application par coulée, notamment par un procédé Ribbon-Flow.

11. Procédé selon l'une quelconque des revendications 7 à 10, **caractérisé par** la fabrication d'un mélange d'un premier composant, comprenant le premier diisocyanate réactif et le diol, et d'un deuxième composant, comprenant le deuxième diisocyanate moins réactif, l'ordre de mélange des deux composants étant quelconque.

12. Utilisation d'un revêtement de rouleau dans une section de presse d'une machine pour fabriquer une bande en matière fibreuse telle qu'une machine à papier, à carton ou à papier mousseline, **caractérisée en ce que** le revêtement de rouleau est réalisé selon l'une quelconque des revendications 1 à 4.

13. Utilisation d'un rouleau selon la revendication 5 dans une section de presse d'une machine pour fabriquer une bande en matière fibreuse telle qu'une machine à papier, à carton ou à papier mousseline.
